# EUROPEAN PATENT APPLICATION

(11) **EP 2 479 921 A1**
(43) Date of publication of application: **25.07.2012**
(21) Application number: 10816593.7
(22) Date of filing: 10.05.2010
(51) Int. Cl.: H04L 9/00

(54) **METHOD AND DEVICE FOR ENCRYPTING USER IDENTITY DURING PAGING PROCEDURE**

(30) Priority: 17.09.2009 CN 200910177021
(71) Applicant: ZTE Corporation, Shenzhen, Guangdong 518057 (CN)
(72) Inventor: BAI, Xiaochun, Shenzhen Guangdong 518057 (CN)
(74) Representative: Wihlsson, Joakim Per Magnus
(86) International application number: PCT/CN2010/072577
(87) International publication number: WO 2011/032389

(57) **Abstract**

The disclosure discloses a method and device for encrypting a subscriber identity during a paging procedure, which are particularly adapted to the paging performed by an MME using an IMSI. The method includes: A, using a key generated by the subscriber identity of the called UE to encrypt data Y which is obtained on the basis of the subscriber identity, then performing paging using a cipher text; and B, after the called UE receives the paging, determining by the called UE whether the cipher text is included, and if the cipher text is included, regarding itself as the called UE. In the first preferred embodiment, the data Y is the subscriber identity; in the second preferred embodiment, the data Y is the data combined by the subscriber identity and the random data X, and the random data X is sent along with the cipher text during the paging; in the third preferred embodiment, the data Y is the data combined by the subscriber identity and the random data Z, and the data Y contains the subscriber identity at a specific location, when receiving the paging, the UE performs decryption using the subscriber identity and determines whether the decrypted plaintext contains the subscriber identity at a location the same as the specific location to determine whether the paging is for itself.

## Description

### TECHNICAL FIELD

The disclosure belongs to the technical field of communications, in particular to a method and device for encrypting a subscriber identity during a paging procedure in a Long Term Evolution (LTE) system.

### BACKGROUND

The 3rd Generation Partnership Project (3GPP) Evolved Packet System (EPS) consists of an Evolved UMTS Terrestrial Radio Access Network (EUTRAN) and an Evolved Packet Core (EPC).

In the EUTRAN, a base station equipment is an evolved Node-B (eNB) which is mainly in charge of wireless communication, wireless communication management and mobility context management.

A Mobility Management Entity (MME) needs to initiate a paging flow if it wants to actively connect a User Equipment (UE). Under a normal condition, an MME performs paging by a Temporary Mobility Subscriber Identity (s-TMSI), but under an abnormal condition, the MME needs to perform paging by an International Mobile Subscriber Identity (IMSI).

A paging message is transmitted at an air interface in a plaintext form; and when the MME performs paging by an IMSI, an IMSI number may be revealed at the air interface, thus resulting in security hazard.

### SUMMARY

The technical problem to be solved by the disclosure is to provide several methods and devices for encrypting a subscriber identity during a paging procedure, so as to encrypt the subscriber identity in the paging procedure.

In order to solve the technical problem above, the disclosure provides a first method for encrypting a subscriber identity during a paging procedure, including:
step A: encrypting a subscriber identity of a called user equipment using a key generated by the subscriber identity to generate a cipher text S1, and performing paging using the cipher text S1; and
step B: after the called user equipment receives a paging message, encrypting the subscriber identity of the called user equipment using a key generated by the subscriber identity to generate a cipher text S2, and if the cipher text S1 is consistent with the cipher text S2, regarding the called user equipment as the object of the paging.

Correspondingly, the disclosure provides a first device for encrypting a subscriber identity during a paging procedure, including a paging initiating device and a called user equipment, wherein
the paging initiating device is adapted to encrypt a subscriber identity of the called user equipment using a key generated by the subscriber identity to generate a cipher text S1 and perform paging using the cipher text S1; and
the called user equipment is adapted to encrypt its own subscriber identity using a key generated by its own subscriber identity to obtain a cipher text S2, determine whether the cipher text S1 and the cipher text S2 in a paging message are consistent, and if they are consistent, regard itself as the called user equipment of the paging.

In order to solve the technical problem above, the disclosure provides a second method for encrypting a subscriber identity during a paging procedure, including:
step A: generating random data X, combining the random data X and a subscriber identity of a called user equipment into data Y, encrypting the data Y using a key generated by the subscriber identity of the called user equipment to generate a cipher text S1, and performing paging using the cipher text S1 and the random data X; and
step B: after the called user equipment receives a paging message, combining the random data X and the subscriber identity of the called user equipment into plaintext data in the same way as combining the random data X and the subscriber identity into the data Y in the step A, then encrypting the plaintext data using a key generated by the subscriber identity of the called user equipment to obtain a cipher text S2, and if the cipher text S1 is consistent with the cipher text S2, regarding the called user equipment as the object of the paging.

Furthermore, in the step A, the combining the random data X and the subscriber identity into the data Y may be:
placing the subscriber identity in front of the random data X to directly obtain the data Y, or, placing the random data X in front of the subscriber identity to directly obtain the data Y.

Correspondingly, the disclosure provides a second device for encrypting a subscriber identity during a paging procedure, including a paging initiating device and a called user equipment, wherein
the paging initiating device is adapted to generate random data X, combine the random data X and a subscriber identity of the called user equipment into data Y, encrypt the data Y using a key generated by the subscriber identity of the called user equipment to generate a cipher text S1, and perform paging using the cipher text S1 and the random data X; and
the called user equipment is adapted to, after receiving a paging message, combine the random data X and its own subscriber identity into plaintext data in the same way as combining the random data X and the subscriber identity into the data Y, then encrypt the plaintext data using a key generated by its own subscriber identity to obtain a cipher text S2, and if the cipher text S1 is consistent with the cipher text S2, regard itself as the called user equipment of the paging.

In order to solve the technical problem above, the disclosure provides a third method for encrypting a subscriber identity during a paging procedure, including:
step A: randomly generating data Z, and combining the random data Z and a subscriber identity of a called user equipment into data Y which contains the subscriber identity at a specific location, wherein the specific location is a location where the subscriber identity appears in the data Y and is only related to the subscriber identity;
step B: encrypting the data Y using a key generated by the subscriber identity and performing paging using the obtained cipher text; and
step C: after the called user equipment receives the cipher text in a paging message, decrypting the cipher text using a key generated by the subscriber identity of the called user equipment to obtain plaintext data, then checking whether the plaintext data contains the subscriber identity of the called user equipment at a location the same as the specific location, and if the subscriber identity of the called user equipment is contained at that location, regarding the called user equipment as the object of the paging.

Furthermore, in the step A, the combining the random data Z and the subscriber identity into the data Y may be:
placing the subscriber identity in front of the random data Z to directly obtain the data Y, or placing the random data Z in front of the subscriber identity to directly obtain the data Y.

Correspondingly, the disclosure provides a third device for encrypting a subscriber identity during a paging procedure, including: a paging initiating device and a called user equipment, wherein
the paging initiating device is adapted to generate random data Z, combine the random data Z and a subscriber identity of the called user equipment into data Y, the data Y containing the subscriber identity at a specific location, the specific location being a location where the subscriber identity appears in the data Y and being only related to the subscriber identity, then encrypt the data Y using a key generated by the subscriber identity and perform paging using the obtained cipher text; and
the called user equipment is adapted to, after receiving the cipher text in a paging message, decrypt the cipher text using a key generated by its own subscriber identity to obtain plaintext data, then check whether the plaintext data contains its own subscriber identity at a location the same as the specific location, and, if its own subscriber identity is contained at that location, regard itself as the called user equipment of the paging.

Furthermore, there is an optimized solution for the three methods and devices provided by the disclosure for encrypting a subscriber identity during a paging procedure:
the paging procedure is initiated to the called user equipment by an MME and the subscriber identity is an IMSI.

The disclosure provides a method and device for encrypting a subscriber identity during a paging procedure to encrypt a subscriber identity when a paging is initiated to a user equipment, thereby avoiding the security hazard caused by the paging due to the direct use of plaintext in the prior art and providing security for communication systems.

### BRIEF DESCRIPTION OF THE DRAWINGS

Fig. 1 is a schematic diagram showing the encryption processing for a subscriber identity during a paging procedure in the first embodiment;
Fig. 2 is a schematic diagram showing the encryption processing for a subscriber identity during a paging procedure in the second embodiment; and
Fig. 3 is a schematic diagram showing the encryption processing for a subscriber identity during a paging procedure in the third embodiment.

### DETAILED DESCRIPTION

The disclosure is further described below with reference to the drawings in detail.

The disclosure provides three methods and devices for encrypting a subscriber identity during a paging procedure, as shown in the following three embodiments.

### First embodiment:

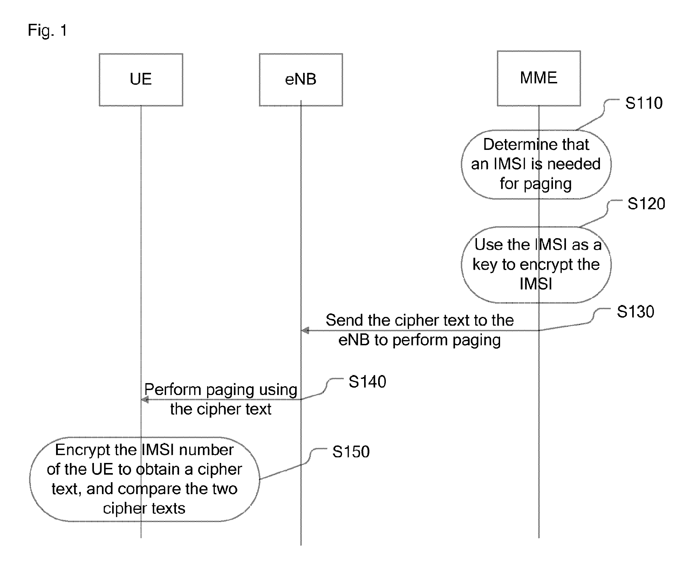

Fig. 1 is a schematic diagram showing the encryption processing for a subscriber identity during a paging procedure in the first embodiment, wherein, with an IMSI as a subscriber identity, a method for encrypting a subscriber identity during a paging procedure in the disclosure includes:
S110: An MME determines that an IMSI is needed for paging;
S120: The MME uses the IMSI as a key, and encrypts the IMSI to obtain a cipher text S1;
S130: The MME sends the cipher text S1 to an eNB;
S140: The eNB performs paging using the cipher text S1; and
S150: After receiving a paging message, a UE uses its IMSI as a key to encrypt its IMSI number to obtain a cipher text S2, and determines whether the cipher text S1 is consistent with the cipher text S2 by comparison, and if they are consistent, then the UE regards itself as the object of the paging.

Preferably, in this embodiment, the subscriber identity can be certainly deformed, the deformed data is used as a key to generate the cipher texts S1 and S2; it should be explained that the deformation algorithms adopted by the MME and the UE should be consistent.

### Second embodiment:

The same IMSI, if encrypted by the method of the first embodiment, always obtains the same cipher text. In order to avoid such circumstance, the following processing can be performed:
before encryption, randomly generating data X, combining the random data X and an IMSI into plaintext data Y, and then using the IMSI as a key to encrypt the data Y to obtain a cipher text. The combining the random data X and the IMSI into the plaintext data Y can be: placing the subscriber identity in front of the random data X to directly obtain the data Y, or, placing the random data X in front of the subscriber identity to directly obtain the data Y. Of course, other combination ways can also be adopted here.

During paging, besides the cipher text, the random data X also needs to be carried.

After receiving the cipher text and the random data X, the UE generates a cipher text according to the random data X and the IMSI of the UE in the same way as the MME generates a cipher text, i.e., firstly combining the random data X and the IMSI of the UE into plaintext data in the same way as combining the random data X and the IMSI into the plaintext data Y, and then, using the IMSI of the UE as a key to encrypt the plaintext data to obtain a cipher text; then, the UE compares the two cipher texts, and if they are consistent, it regards itself as the object of the paging.

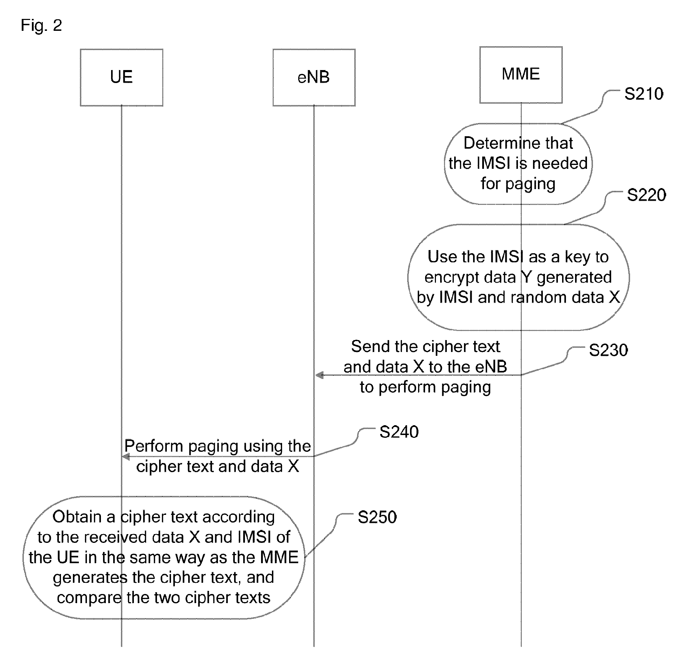

Fig. 2 is a schematic diagram showing the encryption processing for a subscriber identity during a paging procedure in the second embodiment, as shown in this figure, in this embodiment, a method provided by the disclosure for encrypting a subscriber identity during a paging procedure specifically includes:
S210: An MME determines that an IMSI is needed for paging;
S220: The MME uses the IMSI as a key to encrypt plaintext data Y combined by the IMSI and the random data X to obtain a cipher text S1;
S230: The MME sends the cipher text S1 to an eNB to perform paging;
S240: The eNB performs paging using the cipher text S1; and
S250: After receiving a paging message, the UE obtains a cipher text S2 according to the received random data X and its own IMSI in the same way as the MME generates a cipher text, i.e., firstly combining the random data X and the IMSI of the UE into plaintext data in the same way of combining the random data X and the IMSI into the plaintext data Y, ,and then, using the IMSI of the UE as a key to encrypt the plaintext data to obtain a cipher text S2; then, the UE compares the cipher texts S1 and S2, and if they are consistent, it regards itself as the object of paging.

Preferably, in this embodiment, the subscriber identity can be deformed in a certain degree, the deformed data is used as a key to generate the cipher texts S1 and S2, and it should be explained that the deformation algorithms adopted by the MME and the UE should be consistent.

### Third embodiment:

By using the method of the second embodiment, a case in which the same cipher text is always obtained every time if the same IMSI number is used can be prevented, but one more parameter needs to be carried; in this embodiment, a method which does not need any parameter is provided.

Before encryption, the MME randomly generates data Z, and combines the random data Z and an IMSI into plaintext data Y. The data Y is required to contain a complete IMSI number at a specific location, this specific location referring to the location where the subscriber identity appears in the data Y; and in order to be easily identified by a receiving terminal, the location where the subscriber identity appears in the data Y should only be related to the IMSI number. The combining the random data Z and the IMSI into the plaintext data Y can be: placing the subscriber identity in front of the random data Z to directly obtain the data Y, or, placing the random data Z in front of the subscriber identity to directly obtain the data **Y.** Of course, other combination ways can also be adopted here.

Then, the plaintext data Y is encrypted using the IMSI number to obtain a cipher text. The cipher text is sent out during paging.

After receiving the cipher text, the called UE decrypts the cipher text using its own IMSI number to obtain plaintext data, determines whether the plaintext data contains the subscriber identity of the called UE at the location same as the specific location, and if the plaintext data contains the subscriber identity of the called UE at that location, the called UE regards itself as the called object of the paging.

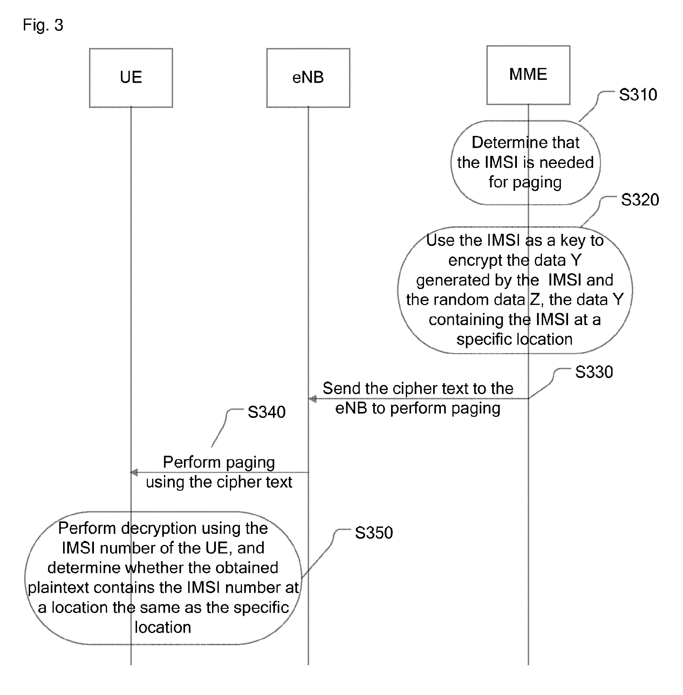

Fig. 3 is a schematic diagram showing the encryption processing for a subscriber identity during a paging procedure in the third embodiment, as shown in this figure, in this embodiment, a method provided in the disclosure for encrypting a subscriber identity during a paging procedure specifically includes:
S310: An MME determines that an IMSI is needed for paging;
S320: The MME uses the IMSI as a key to encrypt plaintext data Y combined by the IMSI and the random data Z to obtain a cipher text S1, wherein the plaintext data Y contains a complete IMSI number at a specific location;
S330: The MME sends the cipher text S1 to an eNB to perform paging;
S340: The eNB performs paging using the cipher text S1; and
S350: After receiving a paging message, a UE uses its own IMSI as a key to decrypt the S1, and determines whether the obtained plaintext contains the IMSI number at a location the same as the specific location, and if the obtained plaintext contains the IMSI number at that location, the UE regards itself as the object of the paging.

Preferably, in this embodiment, the subscriber identity can be certainly deformed, the deformed data is used as a key to generate the cipher text S1, and the UE also deforms its own subscriber identity using the same deformation algorithm as the MME uses, and uses the deformed data as a key to decrypt the cipher text S1, so as to obtain the plaintext.

A first device provide by the disclosure for encrypting a subscriber identity during a paging procedure includes a paging initiating device and a called user equipment, wherein the paging initiating device is adapted to use a subscriber identity of the called user equipment as a key to encrypt the subscriber identity, and perform paging using the obtained cipher text; and the called user equipment is adapted to use its own subscriber identity as a key to encrypt its own subscriber identity to obtain a cipher text, and determine whether the cipher text is the same as that in a paging message received by the called user equipment, and if they are same, regard itself as the called user equipment of the paging.

A second device provided by the disclosure for encrypting a subscriber identity during a paging procedure includes a paging initiating device and a called user equipment, wherein the paging initiating device is adapted to randomly generate data X, combine the random data X and the subscriber identity of the called user equipment into data Y, use the subscriber identity as a key to encrypt the data Y, and perform paging using the obtained cipher text and random data X; and the called user equipment is adapted to, after receiving a paging message, combine the random data X and its own subscriber identity into plaintext data in the same way as combining the random data X and the subscriber identity into the data Y, then, use the subscriber identity as a key to encrypt the plaintext data, and if the obtained cipher text is the same as that in the received paging message, regard itself as the called user equipment of the paging.

A third device provided by the disclosure for encrypting a subscriber identity during a paging procedure includes a paging initiating device and a called user equipment, wherein the paging initiating device is adapted to randomly generate data Z, combine the random data Z and the subscriber identity of the called user equipment into data Y, wherein the data Y containing the subscriber identity at a specific location which is a location where the subscriber identity appears in the data Y and is only related to the subscriber identity, then, use the subscriber identity as a key to encrypt the data Y, and perform paging using the obtained cipher text; and the called user equipment is adapted to, after receiving the cipher text in the paging message, decrypt the cipher text using its own subscriber identity to obtain plaintext data, then check whether the plaintext data contains its own subscriber identity at a location the same as the specific location, and if its own subscriber identity is contained at that location, regard itself as the called user equipment of the paging.

The specific embodiments above are intended for the further description of the objective, technical solution and beneficial effect of the disclosure, it should be noted that these are only the specific embodiments of the disclosure, and various changes and variations of the disclosure can be made by those skilled in the art without departing from the spirit and scope of the disclosure. Therefore, if such changes and variations of the disclosure belong to the scope of technical solution of the claims and equivalents thereof, the disclosure is also intended to contain them.

## Claims

1. A method for encrypting a subscriber identity during a paging procedure, comprising:
step A: using a key generated by a subscriber identity of a called user equipment to encrypt the subscriber identity to generate a cipher text S1, and performing paging using the cipher text S1; and
step B: after the called user equipment receives a paging message, using a key generated by the subscriber identity of the called user equipment to encrypt the subscriber identity to generate a cipher text S2, and if the cipher text S1 is consistent with the cipher text S2, regarding the called user equipment as the object of the paging.

2. The method for encrypting a subscriber identity during a paging procedure according to claim 1, wherein the subscriber identity is an International Mobile Subscriber Identity (IMSI).

3. A method for encrypting a subscriber identity during a paging procedure, comprising:
step A: generating random data X, combining the random data X and a subscriber identity of a called user equipment into data Y, encrypting the data Y using a key generated by the subscriber identity of the called user equipment to generate a cipher text S1, and performing paging using the cipher text S1 and the random data X; and
step B: after the called user equipment receives a paging message, combining the random data X and the subscriber identity of the called user equipment into plaintext data in the same way as combining the random data X and the subscriber identity into the data Y in the step A, then encrypting the plaintext data using a key generated by the subscriber identity of the called user equipment to obtain a cipher text S2, and if the cipher text S1 is consistent with the cipher text S2, regarding the called user equipment as the object of the paging.

4. The method for encrypting a subscriber identity during a paging procedure according to claim 3, wherein, in the step A, the combining the random data X and the subscriber identity into the data Y is:
placing the subscriber identity in front of the random data X to directly obtain the data Y.

5. A method for encrypting a subscriber identity during a paging procedure, comprising:
step A: randomly generating data Z, and combining the random data Z and a subscriber identity of a called user equipment into data Y which contains the subscriber identity at a specific location, wherein the specific location is a location where the subscriber identity appears in the data Y and is only related to the subscriber identity;
step B: encrypting the data Y using a key generated by the subscriber identity and performing paging using the obtained cipher text; and
step C: after the called user equipment receives the cipher text in a paging message, decrypting the cipher text using a key generated by the subscriber identity of the called user equipment to obtain plaintext data, then checking whether the plaintext data contains the subscriber identity of the called user equipment at a location the same as the specific location, and if the subscriber identity of the called user equipment is contained at that location, regarding the called user equipment as the object of the paging.

6. The method for encrypting a subscriber identity during a paging procedure according to claim 5, wherein, in the step A, the combining the random data Z and the subscriber identity into the data Y is:
placing the subscriber identity in front of the random data Z to directly obtain the data Y.

7. A device for encrypting a subscriber identity during a paging procedure, comprising:
a paging initiating device and a called user equipment, wherein
the paging initiating device is adapted to encrypt a subscriber identity of a called user equipment using a key generated by the subscriber identity to generate a cipher text S1 and perform paging using the cipher text S1; and
the called user equipment is adapted to encrypt its own subscriber identity using a key generated by its own subscriber identity to obtain a cipher text S2, determine whether the cipher text S1 and the cipher text S2 in a paging message are consistent, and if S1 and S2 are consistent, regard itself as the called user equipment of the paging.

8. The device for encrypting a subscriber identity during a paging procedure according to claim 7, wherein
the paging initiating device is an Mobility Management Entity (MME), and the subscriber identity is an International Mobile Subscriber Identity (IMSI).

9. A device for encrypting a subscriber identity during a paging procedure, comprising:
a paging initiating device and a called user equipment, wherein
the paging initiating device is adapted to generate random data X, combine the random data X and a subscriber identity of the called user equipment into data Y, encrypt the data Y using a key generated by the subscriber identity of the called user equipment to generate a cipher text S1, and perform paging using the cipher text S1 and the random data X; and
the called user equipment is adapted to, after receiving a paging message, combine the random data X and its own subscriber identity into plaintext data in the same way as combining the random data X and the subscriber identity into the data Y, then encrypt the plaintext data using a key generated by its own subscriber identity to obtain a cipher text S2, and if the cipher text S1 is consistent with the cipher text S2, regard itself as the called user equipment of the paging.

10. The device for encrypting a subscriber identity during a paging procedure according to claim 9, wherein
the paging initiating device is an Mobility Management Entity (MME), and the subscriber identity is an International Mobile Subscriber Identity (IMSI).

11. A device for encrypting a subscriber identity during a paging procedure, comprising:
a paging initiating device and a called user equipment, wherein
the paging initiating device is adapted to generate random data Z, combine the random data Z and a subscriber identity of the called user equipment into data Y, the data Y containing the subscriber identity at a specific location, the specific location being a location where the subscriber identity appears in the data Y and being only related to the subscriber identity, then encrypt the data Y using a key generated by the subscriber identity and perform paging using the obtained cipher text; and
the called user equipment is adapted to, after receiving the cipher text in a paging message, decrypt the cipher text using a key generated by its own subscriber identity to obtain plaintext data, then check whether the plaintext data contains its own subscriber identity at a location the same as the specific location, and, if its own subscriber identity is contained at that location, regard itself as the called user equipment of the paging.

12. The device for encrypting a subscriber identity during a paging procedure according to claim 11, wherein
the paging initiating device is an Mobility Management Entity (MME), and the subscriber identity is an International Mobile Subscriber Identity (IMSI).
